# FASCICULE DE BREVET EUROPEEN

(11) **EP 1 260 992 B1**
(45) Date de publication et mention de la délivrance du brevet: **16.08.2006**
(21) Numéro de dépôt: 02291168.9
(22) Date de dépôt: 07.05.2002
(51) Int. Cl.: H01B 17/32

(54) **Procédé de fabrication pour un isolateur électrique composite ayant un revêtement extérieur et au moins une fibre optique les deux étant compatibles entre eux**
Verfahren zur Herstellung eines elektrischen Verbundisolators mit einer Aussenschicht und mindestens einer optischen Faser, die miteinander kompatibel sind
Process of manufacturing an electrical composite insulator having an outer layer and at least one optical fibre, compatible with each other

(30) Priorité: 22.05.2001 FR 0106701
(43) Date de publication de la demande: 27.11.2002
(73) Titulaire: SEDIVER, SOCIETE EUROPEENNE D'ISOLATEURS EN VERRE ET COMPOSITE, F-92017 Nanterre Cédex (FR)
(72) Inventeur: Lepley, Damien, 63000 Clermont-Ferrand (FR); Moal, Eric, 03270 Saint-Yorre (FR)
(74) Mandataire: Prugneau, Philippe

(56) Documents cités:
- DE-A- 3 815 717
- PATENT ABSTRACTS OF JAPAN vol. 1998, no. 11, 30 septembre 1998 (1998-09-30) & JP 10 162668 A (NGK INSULATORS LTD), 19 juin 1998 (1998-06-19)

## Description

L'invention concerne un procédé de fabrication pour un isolateur électrique composite de poste ou de ligne moyenne ou haute tension et en particulier un isolateur électrique composite comprenant une tige support généralement en un matériau composite, au moins une fibre optique posée sur la périphérie extérieure de la tige support et un revêtement extérieur isolant en un matériau vulcanisé entourant la tige support et recouvrant la fibre optique.

Un tel isolateur composite est connu du document de brevet EP-926516.

Dans cet isolateur connu, le revêtement extérieur isolant est moulé par compression autour de la tige support pour envelopper la fibre optique.

Pour éviter la présence d'inclusions d'air le long de la fibre optique posée sur la tige support, la fibre optique est collée avec un agent adhésif sur la périphérie extérieure de la tige support de telle manière à être complètement recouverte de l'agent adhésif. La couche extérieure de la fibre optique peut être traitée pour faciliter son adhésion avec l'agent adhésif ce qui augmente très sensiblement le coût de fabrication de l'isolateur.

Le but de l'invention est de proposer une autre conception d'un tel isolateur électrique composite muni de fibres optiques.

A cet effet, l'invention a pour objet un procédé pour fabriquer un isolateur électrique composite de poste ou de ligne moyenne ou haute tension comprenant une tige support (6) généralement en un matériau composite, des fibres optiques (1, 1A, 1B, 1C, 1D) posées sur la périphérie extérieure de la tige support et un revêtement isolant extérieur (9) en un matériau élastomère isolant vulcanisé entourant la tige support pour recouvrir les fibres optiques, caractérisé en ce qu'il comprend les étapes consistant à
- utiliser des fibres optiques avec des gaines extérieures (2) en un matériau élastomère thermoplastique, le matériau élastomère thermoplastique étant compatible avec le matériau constituant le revêtement extérieur, et formant une nappe de fibres optiques ;
- poser une couche d'agent adhésif sur la périphérie extérieure de la tige support ;
- poser la nappe de fibres optiques à plat sur la couche d'agent adhésif ;
et déposer le revêtement isolant extérieur (9) autour de la tige support de manière à recouvrir la tige support et les fibres optiques, de sorte qu'une liaison cohésive se forme entre les gaines extérieures des fibres optiques et le revêtement extérieur de l'isolateur lors de la vulcanisation du revêtement extérieur. Avec un tel procédé, le revêtement extérieur de l'isolateur peut être injecté sous haute pression et à haute température autour de la tige support et adhére à la gaine extérieure de la fibre optique et à la tige support sans laisser d'inclusions d'air. II n'est pas utile dans la construction de l'isolateur selon l'invention, d'entourer complètement la fibre optique avec un agent adhésif ce qui simplifie la fabrication de l'isolateur. Si la tige support est un composite résine époxy fibres de verre, la fibre optique est de préférence collée sur la tige support avec le mélange résine epoxy du composite.

Plusieurs fibres optiques en nappe ayant chacune une gaine extérieure en élastomère thermoplastique peuvent être regroupées par thermo-soudage de leur gaine extérieure pour former une nappe de fibres optiques ce qui facilite la pose des fibres optiques sur la tige support et leur guidage vers l'extérieur de l'isolateur à travers les armatures métalliques de celui-ci. En outre, une telle nappe de fibres optiques ainsi formée par thermo-soudage et posée sur la tige support d'un isolateur peut être défaite très facilement pour séparer les extrémités des fibres en vue de leur connexion aux bornes d'appareils de mesure ou de capteurs.

L'invention, ses caractéristiques et ses avantages sont précisés dans la description qui suit en liaison avec les figures évoquées ci-dessous.
La figure 1 illustre très schématiquement selon une vue en coupe, une fibre optique selon l'invention avec une gaine extérieure en un matériau compatible avec celui du revêtement extérieur de l'isolateur composite.
La figure 2 illustre très schématiquement selon une vue en coupe, des fibres optiques regroupées en nappe.
La figure 3 illustre très schématiquement selon une vue partielle, un isolateur composite selon l'invention avec une nappe de fibres optiques posée sur la tige support de l'isolateur.

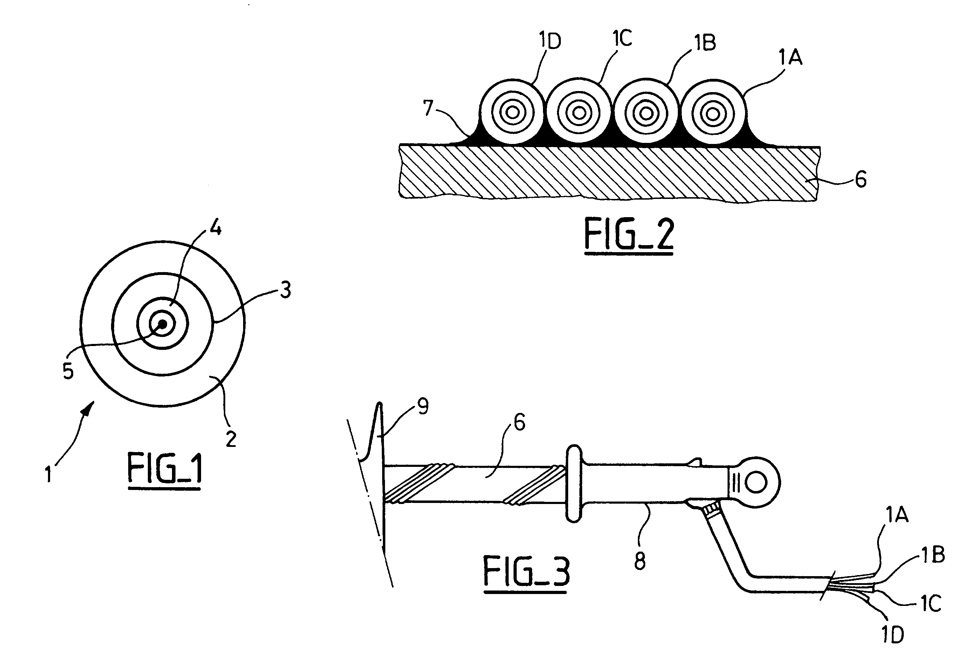

Sur la figure 1, une fibre optique 1 adaptée pour être posée sur la tige support d'un isolateur composite selon l'invention comprend une gaine extérieure 2 compatible avec le revêtement extérieur isolant de l'isolateur.

Le revêtement extérieur d'un isolateur composite est généralement en un élastomère vulcanisé. La gaine extérieure 2 de la fibre optique 1 est en un matériau choisi pour être compatible avec celui du revêtement extérieur dans la condition qu'une liaison cohésive se forme entre la gaine extérieure de la fibre optique et le revêtement extérieur de l'isolateur lors de la vulcanisation de celui-ci. Le matériau de la gaine extérieure 2 de la fibre optique est de préférence un élastomère connu sous la marque « Hytrel ». Dans la fibre optique selon l'invention, la gaine extérieure 2 peur entourer une ou plusieurs gaines de protection mécanique et chimique 3 et 4, lesquelles entourent une gaine optique 5 généralement en acrylate. La gaine optique 5 entoure enfin le coeur de la fibre en silice.

Le matériau connu sous la marque « Hytrel » est un élastomère thermoplastique permettant un regroupement de plusieurs fibres en nappe par thermo-soudage de la gaine extérieure 2 des fibres optiques. Sur la figure 2, une nappe constituée ici à titre d'exemple non limitatif de quatre fibres optiques 1A,1B,1C,1D est montrée posée sur la périphérie extérieure de la tige support 6 d'un isolateur composite. Pour regrouper en nappe plusieurs fibres optiques telles que 1A à 1D, on fait fondre légèrement la surface extérieure de la gaine extérieure des fibres optiques tout en les disposant adjacentes deux à deux pour réaliser un assemblage par soudage des gaines extérieures après refroidissement. Lors du thermosoudage, les fibres optiques disposées adjacentes deux à deux sont passées dans une filière par laquelle elles ressortent disposées en nappe ou ruban.

Comme illustré sur la figure 2, la nappe de fibres optiques 1A à 1D est collée sur la tige support 6 avec un agent adhésif 7 qui ne recouvre pas complètement les fibres optiques. Plus particulièrement, la nappe de fibres optiques est posée sur un ruban d'agent adhésif présentant une largeur légèrement supérieure à celle de la nappe de fibres optiques et une épaisseur avoisinant la moitié du diamètre des fibres optiques. Comme agent adhésif, on pourra utiliser un mélange résine epoxy. Généralement, la tige support 6 d'un isolateur composite est un composite résine epoxy fibres de verre et on utilisera avantageusement le mélange résine epoxy du composite comme agent adhésif pour coller la fibre optique 1 ou une nappe de fibres optiques sur la surface extérieure de la tige support 6.

La figure 3 montre partiellement un isolateur composite selon l'invention muni d'une nappe de fibres optiques. Une extrémité de la tige support 6 de l'isolateur est montrée insérée dans une armature métallique 8 de l'isolateur. La fixation de l'armature métallique 8 sur la tige support 6 peut être réalisée classiquement par rétreint, collage, frettage simple ou encore par collage et frettage. Il est entendu que l'isolateur comporte généralement deux armatures métalliques fixées respectivement aux deux extrémités de la tige support 6. Après fixation des armatures métalliques sur la tige support, une couche d'agent adhésif est posée sur la périphérie extérieure de la tige support selon ici un schéma en hélice. La nappe de fibres optiques est enfilée à travers une des deux armatures et posée à plat sur la couche d'agent adhésif en suivant le même schéma en hélice puis est enfilée à travers l'autre armature métallique de l'isolateur dans le cas où les fibres optiques s'étendent d'un bout à l'autre de l'isolateur. La tige support ainsi munie de fibres optiques est passée en étuve pour accélérer la prise de l'agent adhésif. En sortie d'étuve, la nappe de fibres optiques est collée très fortement sur la tige support. La dernière étape de fabrication de l'isolateur composite selon l'invention consiste à déposer un revêtement extérieur isolant 9 autour de la tige support de manière à recouvrir les fibres optiques. Sur la figure 3, on a représenté une partie du revêtement extérieur 9 de l'isolateur. Ce revêtement forme à sa périphérie extérieure des ailettes comme cela est bien connu. Le revêtement extérieur, généralement un élastomère comme indiqué plus haut, est déposé autour de la tige support par injection sous haute pression et à haute température ou par extrusion de manière à remplir toutes les aspérités de surface sur la périphérie extérieure de la tige support. Ainsi, on évite le risque de formation d'inclusions d'air à l'interface entre la tige support et le revêtement extérieur et le long des fibres optiques. Après la pose du revêtement extérieur sur la tige support, celui-ci est vulcanisé et du fait que la gaine extérieure des fibres optiques et le revêtement extérieur de l'isolateur sont en des matériaux compatibles, il se forme entre eux une liaison cohésive ce qui garantit un assemblage étanche. Comme illustré sur la figure 3, la nappe de fibres optiques est défaite à son extrémité s'étendant à l'extérieur de l'isolateur pour séparer les fibres optiques 1A à 1D. L'assemblage des fibres optiques en nappe doit être réalisé comme indiqué plus haut de manière à ne pas se défaire lors de la pose sur la tige support et à pouvoir être facilement défait manuellement.

Bien entendu, l'invention s'étend à un isolateur composite dans lequel une seule fibre optique est posée sur la tige support de l'isolateur. Dans ce cas, il n'est pas nécessaire que la gaine extérieure 2 de la fibre ait une propriété thermoplastique.

## Revendications

1. Procédé pour fabriquer un isolateur électrique composite de poste ou de ligne moyenne ou haute tension comprenant une tige support (6) généralement en un matériau composite, des fibres optiques (1,1A,1B,1C,1D) posées sur la périphérie extérieure de la tige support et un revêtement isolant extérieur (9) en un matériau élastomère isolant vulcanisé entourant la tige support pour recouvrir les fibres optiques, **caractérisé en ce qu'**il comprend les étapes consistant à
- utiliser des fibres optiques avec des gaines extérieures (2) en un matériau élastomère thermoplastique, le matériau élastomère thermoplastique étant compatible avec le matériau constituant le revêtement extérieur, et formant une nappe de fibres optiques ;
- poser une couche d'agent adhésif (7) sur la périphérie extérieure de la tige support ;
- poser la nappe de fibres optiques à plat sur la couche d'agent adhésif ;
- et déposer le revêtement isolant extérieur (9) autour de la tige support de manière à recouvrir la tige support et les fibres optiques, de sorte qu'une liaison cohésive se forme entre les gaines extérieures des fibres optiques et le revêtement extérieur de l'isolateur lors de la vulcanisation du revêtement extérieur.

2. Procédé selon la revendication 1, dans lequel la tige support est en composite résine epoxy fibres de verre et dans lequel les fibres optiques sont collées sur la tige support avec un agent adhésif constitué par le mélange résine epoxy du composite.

3. Procédé selon l'une des revendications 1 et 2, dans lequel la couche d'agent adhésif forme un ruban présentant une largeur légèrement supérieure à celle de la nappe de fibres optiques et une épaisseur avoisinant la moitié du diamètre des fibres optiques.

4. Procédé selon l'une des revendications 1 à 3, dans lequel le revêtement isolant extérieur est déposé par injection ou extrusion d'élastomère sous haute pression et à haute température.

5. Procédé selon l'une des revendications 1 à 4, dans lequel une pluralité de fibres optiques ayant une gaine extérieure en matériau élastomère thermoplastique sont regroupées par thermosoudage des gaines extérieures pour former une nappe de fibres optiques.

## Claims

1. Process for the production of a composite electrical insulator of a medium-voltage or high-voltage post or line, said insulator comprising a support rod (6), generally of a composite material, optical fibres (1, 1A, 1B, 1C, 1D) placed on the outer periphery of the support rod, and an outer insulating covering (9) of a vulcanised insulating elastomer material surrounding the support rod so as to cover the optical fibres,
**characterized in that** said process comprises the steps consisting in
- using optical fibres having external sheathings (2) of a thermoplastic elastomer material, the thermoplastic elastomer material being compatible with the material constituting the outer covering, and forming a ribbon of optical cables;
- placing a layer of adhesive agent (7) on the outer periphery of the support rod;
- placing the ribbon of optical fibres flat on the layer of adhesive agent;
- and laying the outer insulating covering (9) around the support rod so as to cover the support rod and the optical fibres, such that a cohesive bond is produced between the outer sheathings of the optical fibres and the outer covering of the insulator when the outer covering undergoes vulcanisation.

2. Process according to claim 1, wherein the support rod is of fibreglass epoxy resin composite and wherein the optical fibres are bonded to the support rod by an adhesive agent composed of the epoxy resin mixture of the composite.

3. Process according to either of claims 1 or 2, wherein the layer of adhesive agent forms a strip of a width slightly greater than that of the ribbon of optical fibres and of a depth close to half of the diameter of the optical fibres.

4. Process according to any one of claims 1 to 3, wherein the outer insulating covering is laid by elastomer injection or extrusion under high pressure and at high temperature.

5. Process according to any one of claims 1 to 4, wherein a plurality of optical fibres having an outer sheathing of thermoplastic elastomer material are grouped together by heat fusion of the outer sheathings to form a ribbon of optical fibres.

## Patentansprüche

1. Verfahren zur Herstellung eines elektrischen Verbundisolators aus Verbundmaterial für eine Stütze oder eine Mittel- oder Hochspannungsleitung, bestehend aus einem im allgemeinen aus einem Verbundwerkstoff hergestellten Tragarm (6), optischen Fasern (1, 1A, 1B, 1C, 1D), die am äußeren Umfang des Tragarms verlegt sind, und aus einer äußeren, aus einem vulkanisierten, isolierenden Elastomerwerkstoff bestehenden isolierende Umhüllung (9), welche den Tragarm umgibt, um die optischen Fasern abzudecken, **dadurch gekennzeichnet, dass** es aus den folgenden Schritten besteht:
- Verwenden von optischen Fasern, deren äußerer Mantel (2) aus einem thermoplastischen Elastomerwerkstoff besteht, wobei der thermoplastische Elastomerwerkstoff zu dem die äußere Umhüllung bildenden Werkstoff kompatibel sein muss, und die eine Lage optischer Fasern bilden;
- Aufbringen einer Klebemittelschicht (7) auf den äußeren Umfang des Tragarms;
- Verlegen der Lage der optischen Fasern flach in die Klebemittelschicht;
- und Anbringen der äußeren, isolierenden Umhüllung (9) um den Tragarm, so dass der Tragarm und die optischen Fasern bedeckt werden und dass sich zwischen den äußeren Mänteln der optischen Fasern und der äußeren Umhüllung des Isolators bei der Vulkanisierung der äußeren Umhüllung eine kohäsive Bindung herausbildet.

2. Verfahren gemäß Anspruch 1, bei dem der Tragarm aus einem Glasfaser-Epoxydharz-Verbundwerkstoff besteht und bei dem die optischen Fasern mit einem aus dem Epoxydharzgemisch des Verbundwerkstoffs bestehenden Klebemittel auf den Tragarm geklebt werden.

3. Verfahren gemäß einem der Ansprüche 1 und 2, bei dem die Klebemittelschicht einen Streifen ausbildet, dessen Breite etwas größer ist als die der Lage optischer Fasern und dessen Dicke etwa halb so groß wie der Durchmesser der optischen Fasern ist.

4. Verfahren gemäß einem der Ansprüche 1 bis 3, bei dem die äußere, isolierende Umhüllung durch Spritzen oder Extrudieren eines Elastomers unter hohem Druck und hoher Temperatur aufgebracht wird.

5. Verfahren gemäß einem der Ansprüche 1 bis 4, bei dem eine Vielzahl von mit einem äußeren Mantel aus einem thermoplastischen Elastomerwerkstoff umgebenen optischen Fasern durch Schmelzschweißung der äußeren Mäntel so angeordnet werden, dass sie eine Lage optischer Fasern bilden.
